Europäisches Patentamt

European Patent Office

Office européen des brevets

(19)

(11) Numéro de publication : **0 073 708**
**B1**

(12) FASCICULE DE BREVET EUROPÉEN

(45) Date de publication du fascicule du brevet :
20.02.85

(21) Numéro de dépôt : 82401548.1

(22) Date de dépôt : 18.08.82

(51) Int. Cl.⁴ : **B 29 B 13/02**, B 29 L 9/00,
B 44 C 1/00, B 44 F 3/00

(54) Procédé et installation de drapage de plis en matériaux composites.

(30) Priorité : 19.08.81 FR 8115910

(43) Date de publication de la demande :
09.03.83 Bulletin 83/10

(45) Mention de la délivrance du brevet :
20.02.85 Bulletin 85/08

(84) Etats contractants désignés :
DE GB IT SE

(56) Documents cités :
FR-A- 1 197 940
FR-A- 1 367 014
GB-A- 1 011 744
GB-A- 1 011 745
GB-A- 1 314 065
US-A- 2 451 483
US-A- 4 133 711

(73) Titulaire : **SOCIETE NATIONALE INDUSTRIELLE
AEROSPATIALE Société dite:**
**37 Boulevard de Montmorency**
**F-75781 Paris Cedex 16 (FR)**

(72) Inventeur : **Larribe, André Pierre**
**12 avenue Pasteur Martin Luther King**
**Les Vignes Benettes F-78230 Le Pecq (FR)**

(74) Mandataire : **Lepeudry-Gautherat, Thérèse et al**
**CABINET ARMENGAUD JEUNE CASANOVA et
LEPEUDRY 23 boulevard de Strasbourg**
**F-75010 Paris (FR)**

Jouve, 18, rue St-Denis, 75001 Paris, France

## Description

La présente invention concerne un procédé de drapage de plis en matériaux composites, ainsi qu'une installation destinée à la mise en œuvre du procédé selon l'invention.

Plus précisément, l'invention a pour objet un procédé et une installation permettant, après une dépose manuelle sur un matériau porteur, d'assurer automatiquement le positionnement précis, le contrôle de ce positionnement, le transfert et l'empilage sur un outillage de moulage, de plis de formes quelconques choisies, en matériaux composites, en vue de réaliser une pièce de forme et d'épaisseur choisies offrant notamment de bonnes caractéristiques mécaniques, ces plis étant encore communément désignés par le terme de « panneaux » ou « flancs », bien qu'il s'agisse dans le cadre de l'invention, d'éléments découpés, et non pliés, selon un contour fermé, de formes et de dimensions choisies, dans une nappe de dimensions appropriées d'un tissu en matériau composite, et présentant de préférence une orientation choisie par rapport à la forme de l'élément, des fibres entrant dans la composition du matériau composite.

On sait que les nappes réalisées en certains matériaux composites comprennent une multitude de fils élémentaires de quelconques microns de diamètre, réunis en torons de 1 000 à 6 000 unités·environ pour former des fibres qui sont mises côte à côte puis imprégnées d'une résine pour former des nappes de largeur variable, dans lesquelles il est possible de découper des plis ou panneaux à draper sur un outillage de moulage sur au moins un pli préalablement drapé sur ce dernier, le nombre de plis à superposer étant défini en fonction de l'épaisseur de la pièce voulue, tandis que les positions, les formes et les tailles respectives et relatives de ces plis sont définies en fonction de la forme de la pièce voulue, qui est obtenue à l'issue d'un procédé physico-chimique de solidarisation des différents plis empilés, par exemple par polymérisation sous pression en étuve.

On sait également qu'il est nécessaire d'orienter les fibres de chaque pli dans le sens des efforts que subiront les pièces à réaliser, afin d'optimiser les caractéristiques mécaniques de ces dernières, et qu'il est donc impératif de faire en sorte que ces orientations soient parfaitement respectées lors de la réalisation des pièces, et en particulier lors de l'empilage des plis successifs sur les formes ou outillages de moulage.

En l'état actuel de la technique, deux procédés sont principalement mis en œuvre pour la réalisation de pièces en matériaux composites par drapage et empilage de plis.

L'un de ces procédés est mis en œuvre de façon entièrement manuelle : il consiste à découper, à positionner et à empiler sur l'outillage de moulage les plis successifs entrant dans la réalisation d'une pièce déterminée. Toutes ces opérations sont effectuées à la main. Il est ensuite nécessaire d'enfermer la pile de plis ainsi obtenue dans une enceinte étanche, dans laquelle est effectué un vide partiel, afin d'éliminer tout risque d'inclusion d'air entre les plis empilés, et ce, d'autant plus longtemps que la pièce est épaisse, et donc que le nombre des plis, et éventuellement des renforts ou inserts, localement intercalés entre deux plis, est élevé.

De plus, un tel drapage manuel ne permet qu'un contrôle approximatif de l'orientation des fibres des plis empilés, en particulier dans le cas de plis découpés dans un matériau composite à fibres de carbone disposées de façon unidirectionnelle, de sorte que les caractéristiques mécaniques de la pièce finalement obtenue ne peuvent être garanties.

Enfin, un drapage manuel conduit à des temps de production élevés, donc à un coût de main-d'œuvre excessif, qui, additionné à des coûts de matière première importants, entraîne un prix de revient prohibitif pour un produit fini peu fiable, de sorte que le rapport performances sur coût auquel on aboutit mène à un échec commercial.

Le second procédé de réalisation de pièces en matériaux composites par drapage et empilage de plis est mis en œuvre de façon essentiellement linéaire, continue et automatique sur une seule et même machine, constituant une chaîne de production automatisée et intégrée, pilotée par un ordinateur.

Selon ce procédé, décrit dans le brevet des Etats-Unis d'Amérique n° 4 133 711, un matériau porteur est disposé dans une première zone de travail, puis des portions adjacentes, en nombre préprogrammé, et chacune coupée à une longueur préprogrammée, d'une bande d'un tissu d'un matériau composite, sont déposées sur le matériau support, suivant une orientation inclinée sur une direction privilégiée du matériau support, pour réaliser un pli en matériau composite. Puis l'ensemble constitué par le pli et le matériau support est transféré de la première zone de travail dans une seconde zone de travail, en même temps qu'un nouveau matériau support est disposé dans la première zone de travail. Le découpage du pli transféré, selon un contour fermé préprogrammé, est ensuite effectué, tandis que des portions de bande du matériau composite, constitutives d'un nouveau pli, sont déposées sur le nouveau matériau support dans la première zone de travail. La comparaison du découpage effectué avec le modèle du découpage souhaité est ensuite effectuée et, en cas d'accord, le pli découpé selon le modèle souhaité, est transféré de la seconde zone de travail sur une forme ou outillage de moulage, tandis que s'amorce le transfert du nouveau pli de la première zone de travail vers la seconde.

La machine faisant l'objet du brevet précité, pour la mise en œuvre du procédé qui vient d'être présenté, comprend un portique de transfert, se déplaçant à l'aplomb d'une table de dépose, et sous lequel est montée une tête de transfert munie d'une pince transversale susceptible de saisir l'extrémité d'un rouleau de matériau porteur afin d'en dérouler une longueur sur la table de dépose, équipée d'un dispositif d'aspiration au niveau de sa surface de réception du matériau porteur, un outil de coupe étant ensuite déplacé transversalement sur la bande déroulée de matériau porteur pour en découper un pan recouvrant la table de dépose. Un portique de dépose est ensuite déplacé à l'aplomb de la table de dépose, et une tête de dépose, montée rotative sous une plate-forme montée elle-même déplaçable transversalement sur le portique, comprend un cylindre d'alimentation, sur lequel sont enroulées une bande de tissu du matériau composite et une bande de matériau intercalaire, un dispositif de séparation, assurant la séparation du matériau intercalaire et du matériau composite, lors du déroulement du cylindre d'alimentation, un dispositif de coupe de la bande de tissu du matériau composite, afin d'obtenir les portions de cette dernière qui seront disposées de façon adjacente, un dispositif de guidage, amenant la bande de tissu du matériau composite vers un cylindre d'application, assurant la mise en contact de la bande de tissu du matériau composite sur la table de dépose, ainsi qu'un cylindre de rembobinage du matériau intercalaire.

Après la réalisation d'un pli, déposé sur le pan de matériau support recouvrant la table de dépose, le transfert est assuré par le portique de transfert, sous lequel est montée la tête de transfert équipée d'un dispositif de succion ou d'aspiration, qui est activé à l'aplomb de l'ensemble constitué par le pli et par le pan de matériau de transfert, tandis que le dispositif d'aspiration de la table de dépose est désactivé, le portique de transfert étant ensuite déplacé à l'aplomb d'une table de découpe, également munie d'un dispositif d'aspiration activé alors que le dispositif de succion de la tête de transfert est désactivé, pour assurer la dépose de l'ensemble constitué par le pan de matériau porteur et par le pli sur la table de découpe, la pince transversale équipant la tête de transfert assurant, lors du déplacement du portique de transfert, le recouvrement de la table de dépose par un nouveau pan de matériau porteur.

La découpe du pli selon un contour fermé préprogrammé, est ensuite effectuée au moyen d'un laser, disposé sous un portique de découpe déplacé à l'aplomb de la table de découpe, tandis que le portique de dépose et la tête de dépose assurent la réalisation d'un nouveau pli sur le nouveau pan de matériau porteur disposé sur la table de dépose.

La comparaison entre le découpage effectué et le modèle du découpage souhaité est assurée par un dispositif de surveillance à balayage, muni d'une caméra de télévision projetant l'image du découpage effectué sur un écran vidéo sur lequel s'effectue la comparaison. Si le découpage est correct, la table de découpe, sur laquelle le pli découpé et le pan de matériau porteur sont retenus par le dispositif d'aspiration, se translate et bascule sous la commande d'un actuateur rotatif, de façon à déposer le pli découpé sur une forme ou outillage de moulage disposé sur une table de moulage adjacente à la table de découpe. Un dispositif d'application ou de décochage, à barre, assure la mise en contact du pli avec la forme de moulage pour éviter tout flottement avant que le dispositif d'aspiration de la table de découpe basculée ne soit désactivée.

Les différents éléments mobiles de la machine sont commandés par un ordinateur synchronisant leurs déplacements et pilotant la réalisation des séquences.

Cette machine, d'une structure complexe, est donc d'acquisition coûteuse, est également délicate à mettre en œuvre, d'où des coûts de maintenance élevés.

De par son volume, elle occupe une surface au sol conséquente, et nécessite une surface d'installation importante pour une réalisation industrielle des produits finis.

De plus, il s'agit d'une machine très adaptée à la fabrication de pièces de grandes dimensions et en grande série, afin d'obtenir un prix de revient le plus faible possible. Pour la réalisation de pièces de dimensions moins importantes et en nombres limités, cette machine conduirait à un prix de revient élevé, voire prohibitif.

Il faut également noter l'importance et les coûts des travaux préparatoires de programmation, et, enfin, considérer que cette machine sophistiquée n'est cependant pas d'un fonctionnement entièrement automatique, puisqu'une intervention manuelle est prévue pour enlever les chutes des plis découpés sur la table de découpe, avant le basculement de 180° de cette dernière. Cette intervention manuelle a pour conséquence de ralentir le déroulement des séquences, et d'augmenter le prix de revient des produits finis.

Par la présente invention, on se propose de remédier aux inconvénients présentés par la mise en œuvre des procédés précités, notamment sur le plan des coûts et de la complexité des dispositifs, et en particulier d'offrir une solution intermédiaire entre la fabrication entièrement manuelle de pièces par drapage et empilage de plis ou panneaux en matériaux composites, et la fabrication entièrement automatisée en grandes séries de telles pièces de grande dimension.

La mise en œuvre du procédé selon l'invention présuppose que soient réalisés, d'une part, le découpage des plis, en nombres voulus, selon des formes correspondant à des contours fermés, de dimensions et avec des orientations de fibres voulues, les plis découpés étant éventuellement stockés empilés les uns sur les autres et séparés chacun du ou des plis adjacents par des couches d'un matériau séparateur, et, d'autre part, le traçage des contours des différents plis sur un patron.

Le procédé selon l'invention, pour le drapage de plis en matériaux composites en tissu ou en nappe unidirectionnelle comprenant des fibres sur un outillage de moulage, du type consistant à disposer une portion d'un matériau porteur dans une première zone de travail, à disposer sur cette portion du matériau porteur un pli en matériau composite, et à transférer cette portion de matériau porteur et le pli dans une seconde zone de travail, se caractérise en ce qu'il consiste de plus, après la disposition de la portion de matériau porteur dans la première zone de travail, à faire apparaître sur cette portion l'image du contour, prétracée sur le patron, du pli correspondant, puis à déposer manuellement sur cette portion du matériau porteur le pli correspondant, préalablement découpé comme précisé ci-dessus, et à l'amener en juxtaposition sur l'image de son contour, puis à contrôler ensuite l'orientation du pli, le procédé selon l'invention consistant en outre à positionner le pli disposé sur la portion de matériau porteur en regard de l'outillage de moulage, à la fin de leur transfert dans la seconde zone de travail, puis à isoler la portion du matériau porteur recevant le pli dans une enceinte étanche, contenant l'outillage de moulage, et enfin à mettre l'enceinte étanche en dépression, de façon à provoquer la mise en place et le compactage du pli sur l'outillage de moulage ou sur au moins un autre pli préalablement drapé sur ce dernier.

De préférence, le procédé selon l'invention consiste en outre, en même temps que s'effectuent respectivement le transfert de la portion du matériau porteur et du pli dans la seconde zone de travail et la mise en dépression de l'enceinte étanche, à faire apparaître l'image du contour d'un autre pli sur une autre portion d'un matériau porteur, disposée dans la première zone de travail, et à déposer manuellement sur cette autre portion, cet autre pli correspondant, en l'amenant en juxtaposition sur l'image de son contour.

Avantageusement, on transfère la portion de matériau porteur de la première à la seconde zone de travail tandis que l'autre portion de matériau porteur est transférée de la seconde à la première zone de travail.

Le procédé selon l'invention consiste également à contrôler l'orientation de chaque pli sur sa trajectoire, lors de son transfert avec la portion correspondante de matériau porteur, de la première à la seconde zone de travail, et à commander le retour du pli dans la première zone de travail en cas de mauvaise orientation.

Une autre caractéristique du procédé selon l'invention consiste à faire apparaître par transparence, sur des portions successives de matériau porteur disposées dans la première zone de travail, les images des contours des plis successifs, préalablement tracés sur un patron transparent.

De préférence, dans ce cas, le procédé consiste en outre à faire apparaître l'image de chaque contour sur la face de la portion du matériau porteur opposée à celle sur laquelle est déposé le pli correspondant, la disposition en juxtaposition du pli avec l'image de son contour étant ainsi autorisée par transparence de la portion du matériau porteur.

Pour la mise en œuvre de ce procédé, l'invention a également pour objet une installation de drapage de plis en matériaux composites en tissu ou en nappe unidirectionnelle comprenant des fibres sur un outillage de moulage, se caractérisant en ce qu'elle comprend une bande transfert, souple et déformable, d'un matériau porteur, entraînée par au moins deux tambours dont l'un au moins est actionné par des moyens d'entraînement, et entre lesquels l'installation présente deux zones de travail, dans chacune desquelles peut être amenée au moins une portion de travail de la bande transfert, en ce que des moyens de projection font apparaître sur chaque portion de travail de la bande transfert, reçue dans la première zone de travail, l'image du contour d'un pli en matériau composite tracé sur un patron, de sorte que le pli correspondant puisse être disposé sur toute portion de travail en position dans la première zone de travail, en ce que chaque pli disposé sur une portion de travail de la bande transfert, elle-même reçue dans la seconde zone de travail, soit en regard d'un outillage de moulage porté par une table-support, munie d'une prise de dépression reliée à une source de dépression, et autour duquel la portion de travail de la bande transfert peut être comprimée de façon étanche contre un appui par des moyens d'application escamotables, définissant entre la portion de travail de la bande transfert, l'outillage de moulage et la table-support, une chambre étanche susceptible d'être mise en dépression pour assurer, par déformation de la portion de travail de la bande transfert, la mise en place du pli et son compactage sur l'outillage de moulage ou sur au moins un pli préalablement plaqué sur ce dernier.

Dans une forme préférée de réalisation, l'appui comprend un bossage périphérique porté par la table-support autour de l'outillage de moulage et de la prise de dépression, et en regard duquel l'installation présente les moyens d'application escamotables comprenant un corps expansible porté par un cadre, de sorte que la portion de travail de la bande transfert, reçue dans la seconde de travail, entre le cadre et le bossage périphérique de la table-support, puisse être comprimée de façon étanche sur le bossage périphérique par l'expansion du corps expansible. Ce dernier est par exemple constitué par un joint ou boudin gonflable, retenu dans une rainure ménagée dans le cadre en regard du bossage périphérique.

Selon une caractéristique particulière propre à l'installation conforme à l'invention, le patron sur lequel sont tracés les contours des plis successifs est constitué par un film transparent interposé entre une source lumineuse et la bande transfert, dans la première zone de travail. La source lumineuse est de préférence constituée d'une pluralité de tubes luminescents avec interposition d'une plaque de verre dépoli entre ces derniers et le film transparent.

Avantageusement, le film transparent est déroulé pas à pas, à partir d'un rouleau de chargement et en passant par l'intermédiaire d'un dispositif de tension comprenant au moins un rouleau, au moyen d'un rouleau de renvoi, entraîné par l'intermédiaire d'un dispositif d'embrayage à partir du dispositif d'entraînement de la bande transfert, de sorte que les contours des différents plis soient présentés et arrêtés successivement dans la première zone de travail en regard d'une portion de travail de la bande transfert, puis enroulés sur un rouleau de déchargement.

Pour compléter cette forme de réalisation, les portions de travail au moins de la bande transfert peuvent être réalisées en une matière transparente, l'image des contours des plis étant alors projetée sur la face des portions de travail de la bande transfert qui n'est pas destinée à recevoir les plis, la juxtaposition de ces derniers sur l'image de leurs contours correspondants étant ainsi autorisée par la transparence des portions de travail de la bande transfert.

Afin d'éviter tout plissage ou formation d'ondulation dans les plis disposés sur les portions de travail de la bande transfert, ces dernières sont munies d'un dispositif d'aspiration, assurant une dépression au niveau de leur surface destinée à recevoir les plis.

De préférence dans ce cas, chaque dispositif d'aspiration comprend une pluralité d'orifices régulièrement pratiqués dans la face de la portion de travail de la bande transfert destinée à recevoir les plis, les orifices débouchant dans des canaux percés dans l'épaisseur de la portion de travail et débouchant eux-mêmes dans des tubes bordant latéralement la bande transfert et reliés à une source de dépression.

Afin d'assurer le contrôle de l'orientation des plis, sur toute la largeur de la bande transfert, l'installation comprend des capteurs de résistivité, montés sur au moins deux rouleaux venant en contact avec les plis sur leur trajectoire entre la première et la seconde zone de travail, les capteurs étant sensibles aux variations de résistivité du matériau composite entre deux contacts d'écartement constant définis par les rouleaux de capteurs. Dans le cas où les capteurs détectent une mauvaise orientation d'un pli, ils commandent bien entendu le déplacement en sens inverse du pli, de façon à ramener le pli et la portion de travail de la bande transfert qui le porte à nouveau dans la première zone de travail.

Dans une forme préférée de réalisation, la bande transfert se présente sous la forme d'une bande sans fin, montée autour de deux tambours rotatifs d'axes horizontaux et parallèles, les première et seconde zones de travail de l'installation étant définies respectivement à la partie supérieure et à la partie inférieure entre les deux tambours, et la bande transfert présentant deux portions de travail espacées l'une de l'autre de telle sorte que lorsque des contacts portés par la bande transfert commandent l'arrêt du déplacement de cette dernière dans une position dans laquelle l'une des portions de travail est reçue dans l'une des zones de travail, l'autre portion de travail est simultanément reçue dans l'autre zone de travail.

L'installation mettant en œuvre le procédé selon l'invention permet la mise en place précise de plis en matériaux composites pré-imprégnés ou non, à base de verre, de carbone ou du matériau commercialisé sous le nom de marque de KEVLAR par exemple, et l'empilage de ces plis sur l'outillage de moulage sans intervention manuelle.

Cette mise en place s'effectuant par dépression, elle supprime le risque d'inclusion de poches d'air entre les différents plis drapés, tout en assurant pli par pli, un compactage diminuant le foisonnement. Dans le cas d'utilisation de nappes en matériaux composites à base de fibres de carbone, l'orientation des fibres des plis drapés doit être absolument respectée, si l'on veut assurer les caractéristiques mécaniques du produit final.

Il est à remarquer que le système de détection, équipant l'installation selon l'invention, permet non seulement de déclencher l'arrêt immédiat de la séquence en cours, dans le cas d'une mauvaise orientation d'un pli, mais également dans le cas de l'oubli d'une éventuelle couche de matériaux séparateurs sur ce pli.

La présente invention sera mieux comprise, à l'aide d'un exemple particulier de réalisation, qui sera décrit ci-après, à titre non limitatif, en référence aux figures annexées dans lesquelles :

la figure 1 est une vue en coupe schématique de l'installation de drapage selon l'invention ;

la figure 2 est une vue en coupe transversale de la bande transfert de l'installation selon la figure 1, dans une première zone de travail ;

la figure 3 est une vue en coupe transversale de la bande transfert portant un pli au droit de l'enceinte contenant l'outillage de drapage dans une seconde zone de travail, et

la figure 4 est une vue identique à la figure 3, montrant la mise en place et le compactage d'un pli sur l'outillage de drapage.

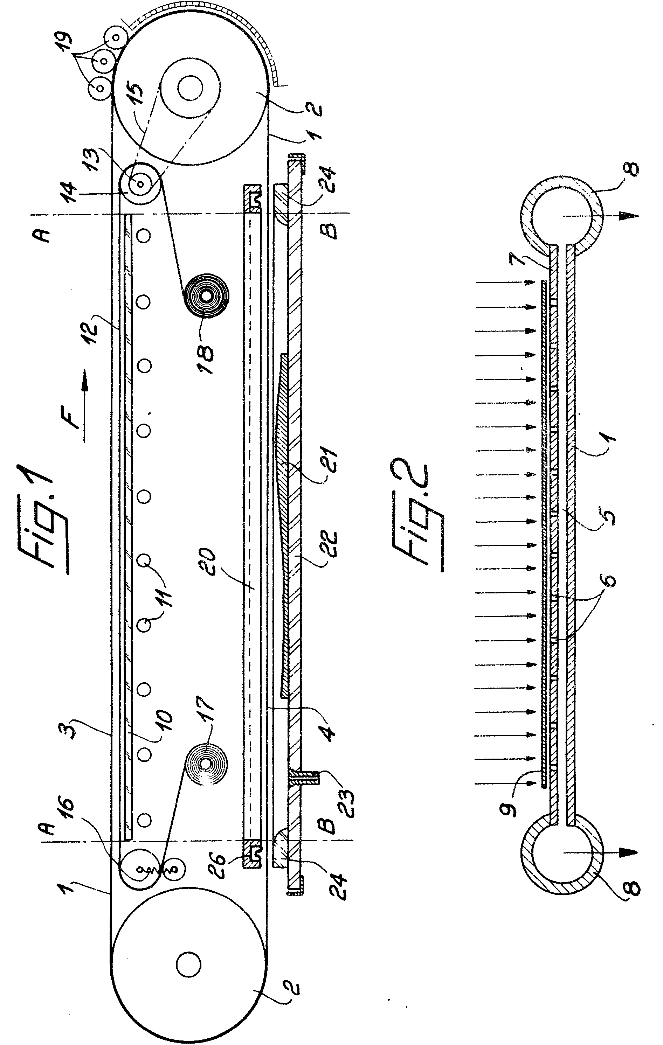

En référence aux figures 1 à 4, la machine comprend une bande transfert 1, réalisée au moyen d'une bande rectangulaire en élastomère de silicone très transparent, dont les extrémités ont été raccordées de façon à constituer une bande sans fin souple et déformable. Cette bande transfert 1 est montée autour de deux tambours cylindriques 2, de même diamètre, montés en rotation autour d'axes parallèles disposés dans un plan horizontal, et entraînés en rotation par un moteur électrique (non représenté). De la sorte, les deux parties en regard l'une de l'autre de la bande transfert 1, entre les deux tambours 2 et à quelque distance de ceux-ci, sont des parties planes et horizontales disposées l'une au-dessus de l'autre, la partie supérieure et la partie inférieure étant reçues respectivement dans une première et dans une seconde zone de travail AA et BB délimitées entre les tambours 2. Sur la bande transfert 1 sont définies deux portions de travail 3 et 4, rectangulaires, non adjacentes, de même longueur, et disposées de telle sorte que lorsque la première portion de travail 3 se trouve dans la première zone de travail AA, la seconde portion de travail 4 se trouve dans la seconde zone de travail BB, et inversement. Des contacts (non représentés) portés par la bande transfert 1 permettent d'interrompre l'entraînement de la bande 1 dans le sens de la flèche F par les tambours 2, lorsque les deux portions de travail 3 et 4 occupent les deux zones de travail AA et BB.

Au niveau des deux portions de travail 3 et 4, la bande transfert 1 est traversée transversalement dans son épaisseur par un réseau de canaux transversaux 5, dans lesquels débouchent des orifices 6 percés selon un réseau à pas constant de l'ordre de 20 à 30 mm, dans la face extérieure 7 des portions de travail 3 et 4, par rapport à la boucle définie par la bande transfert 1, et qui correspond à la face supérieure, lorsque ces portions 3 et 4 occupent la première zone de travail AA, cette face extérieure 7 constituant la face d'appui, destinée à recevoir un pli en matériau composite, préalablement découpé selon le contour requis et débarrassé d'une éventuelle couche de matériau séparateur. Les canaux transversaux 5 débouchent eux-mêmes par leurs deux extrémités dans deux tubes 8 en caoutchouc, dont chacun borde latéralement en le chevauchant un côté de la bande transfert 1. Les deux tubes 8 sont reliés à une source de dépression, dès que la machine à draper est mise en fonctionnement, de sorte que les canaux transversaux 5 et les orifices 6 assurent une dépression à la surface extérieure 7 des portions de travail 3 et 4 de la bande transfert 1, cette dépression coopérant avec la pression atmosphérique pour maintenir un pli 9, déposé manuellement sur la face extérieure 7, correctement positionné, sans plis ni ondulations ou foisonnement sur cette dernière, comme cela apparaît sur la figure 2.

Sous la partie de la bande transfert 1 dans la première zone de travail AA, est disposée une plaque de verre dépoli 10, susceptible d'être éclairée par en dessous par des tubes au néon 11. Dans l'intervalle de faible épaisseur délimité entre la plaque de verre dépoli 10 et la partie de la bande transfert 1 dans la première zone de travail AA, un film transparent 12 est amené à se déplacer dans la même direction que la bande transfert 1, et à s'arrêter momentanément sous l'une des portions de travail 3 et 4, lorsque celles-ci occupent la première zone de travail AA. Ce film transparent 12 est un patron sur lequel ont été préalablement tracés, en position et avec l'orientation voulues, les contours des découpes des différents plis successifs entrant dans la constitution d'une pièce, et une image de ces contours est projetée par le dispositif de projection réalisé au moyen des tubes au néon 11 et du verre dépoli 10 sur la face intérieure de la portion de travail 3 ou 4 en position dans la première zone de travail AA, l'image de ce contour apparaissant sur la face extérieure 7 de cette même portion de travail 3 ou 4 en raison de la transparence du matériau qui la constitue.

Le déplacement du film transparent 12 est assuré à partir du moteur électrique d'entraînement des tambours 2, par l'intermédiaire d'un embrayage magnétique 13, représenté schématiquement sur l'arbre d'entraînement en rotation d'un rouleau de renvoi 14, et d'une courroie de transmission 15 reliant cet embrayage 13 à l'arbre d'entraînement en rotation d'un tambour 2. Le rouleau de renvoi 14 est disposé à la sortie de l'intervalle entre la plaque de verre dépoli 10 et la bande transfert 1, qui est traversé par le film transparent 12, et à l'entrée duquel ce film 12 est guidé par un dispositif tendeur 16, comprenant un rouleau sollicité élastiquement, et recevant le film 12 d'un rouleau de chargement 17, tandis que le film 12 est enroulé sur un rouleau de déchargement 18, après passage autour du rouleau de renvoi 14.

Au départ de la séquence, la vitesse de déplacement du film 12 est la même que celle de la bande transfert 1, mais l'arrêt de l'un de deux éléments mobiles que constituent le film 12 et la bande 1 peut s'effectuer indépendamment de l'arrêt de l'autre. Sur l'un des côtés du film 12, et sur toute la longueur de ce dernier, une bande de quelques centimètres de large est réservée au codage des informations, soit sous forme de perforations si ce codage est réalisé à l'aide de contacts électriques, soit sous forme de repères s'il s'agit de lecteurs optiques. Ces informations commandent notamment l'arrêt du film 12, et concernent également l'orientation du pli 9 et le contrôle de cette orientation.

Ce contrôle est basé sur la variation de résistivité que présente un matériau composite entre deux points de contact d'un capteur de résistivité séparés par un écartement constant. La mesure peut être effectuée sous un angle de 0°, c'est-à-dire dans le sens des fibres, ou sous un angle allant jusqu'à 90°, c'est-à-dire perpendiculairement à la direction des fibres. La résistivité varie avec une très grande amplitude, suivant une forme sinusoïdale, compte tenu des contacts aléatoires obtenus sur des fibres ou sur la résine de la matrice qui présente une très forte résistivité. A l'aide d'un pont diviseur, on transforme cette variation sinusoïdale de résistivité en tension capable, après amplification d'actionner des dispositifs électriques de commande. Des capteurs de résistivité sont montés sur trois rouleaux 19, entrant en contact avec la face extérieure de la bande de transfert 1 sur sa trajectoire entre la première et la seconde zone de travail AA et BB, par exemple au niveau du tambour d'entraînement 2. Ces capteurs contrôlent sur toute la largeur de la bande transfert 1 l'orientation des plis 9 déposés sur les portions de travail 3 et 4 ainsi éventuellement que l'oubli sur l'un des plis 9 d'une couche de matériau séparateur qui recouvre les nappes en matériaux composites pour leur stockage.

Au niveau de la deuxième zone de travail BB, la bande transfert 1 est interposée entre, d'une part, un cadre 20 de forme rectangulaire, de longueur légèrement supérieure à celle de la zone de travail BB et de largeur légèrement inférieure à celle de la bande de transfert 1, et disposé du côté de la face intérieure de cette dernière, et, d'autre part, un outillage de moulage 21, porté sur une table-support 22 disposée du côté de la face extérieure de la bande transfert 1, et traversée par une prise de dépression 23, l'outillage de moulage 21 et le débouché de la prise de dépression 23 vers la bande transfert 1 étant entourés d'un bossage périphérique 24 également porté par la table-support 22 en regard du cadre 20. La face du cadre 20 tournée vers la bande transfert 1 et le bossage périphérique 24 présente une rainure 25, au fond de laquelle est retenu un joint ou boudin gonflable 26, susceptible d'être mis en communication avec une source de pressurisation, par exemple une source d'air comprimé, ou avec une source de dépression.

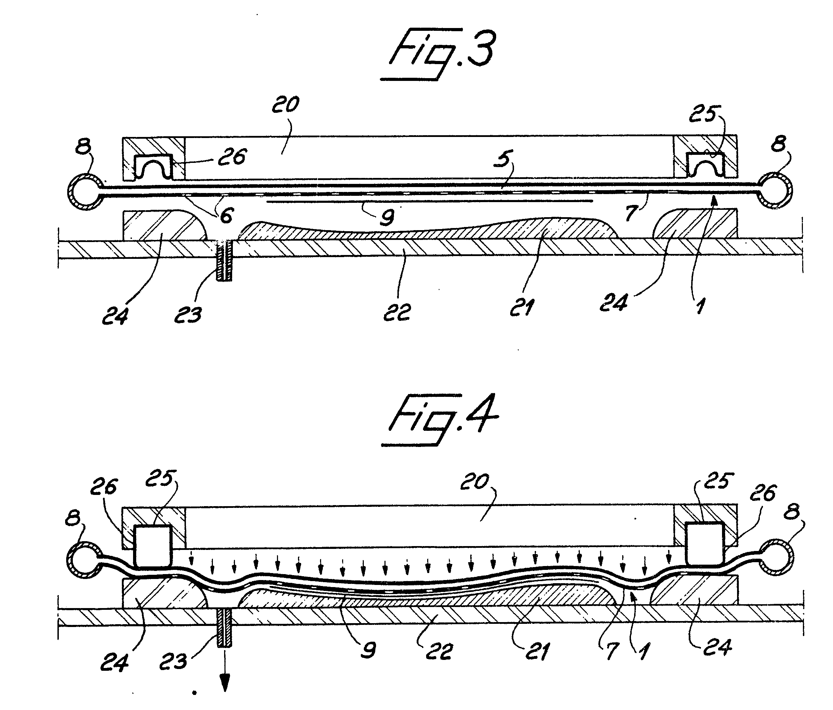

A partir de sa position dégonflée, représentée sur la figure 3, si le joint ou boudin 26 est relié à la source de pressurisation, il se gonfle en appliquant puis en comprimant la bande transfert 1 contre le bossage périphérique 24, sur tout le pourtour de ce dernier, de façon à définir entre la bande transfert 1, le bossage périphérique 24, la table-support 22 et l'outil de moulage 21, une chambre étanche, susceptible d'être mise en dépression par la prise de dépression 23, comme représenté sur la figure 4. Comme la pression atmosphérique s'applique sur la face intérieure de la partie de la bande transfert 1 entourée par le cadre 20, cette partie est alors plaquée vers la table-support 22 contre l'outillage de moulage 21, sur lequel est ainsi transféré tout pli 9 porté par une portion de travail 3 ou 4 occupant la position de cette partie de bande transfert 1. Le retour du joint ou boudin 26 en position dégonflée est obtenu en le raccordant quelques instants à une source de dépression, ou, si le joint ou boudin 26 est réalisé en une matière élastique et si le rappel élastique est suffisant pour assurer un dégagement convenable du joint 26 au-dessus de la bande transfert 1, en le mettant en communication avec l'atmosphère.

Il apparaît donc que la partie de la machine située dans la première zone de travail AA est réservée à la dépose manuelle et au positionnement des plis sur les portions de travail 3 et 4 de la bande transfert 1, en juxtaposition sur l'image de leur contour respectif, tandis que la partie située dans la seconde zone de travail BB est réservée à la mise en place sous vide et au compactage des plis 9 sur l'outillage 21.

Cette machine, dont la structure vient d'être décrite, fonctionne de la manière suivante : le rouleau de chargement 17 du film transparent 12, portant les contours des plis 9, est disposé sur la machine. Puis ce film 12 est déroulé autour du dispositif tendeur 16 et du rouleau de renvoi 14, assurant son entraînement, et rembobiné sur le rouleau de déchargement 18, jusqu'à faire apparaître en position convenable, déterminée par le codage sur le film 12, dans la première zone de travail AA, le contour du premier pli 9, tandis qu'une portion de travail, par exemple 3, de la bande transfert 1 est simultanément et également amenée dans la première zone de travail AA. Le film 12 et la bande transfert 1 sont alors immobilisés en regard l'un de l'autre dans ces positions, et l'image du contour du premier pli 9 est projetée grâce aux tubes néon 11 et au verre dépoli 10 sur la face intérieure de la portion de travail 3, et apparaît nettement sur la face extérieure 7 de cette dernière, en raison de la transparence de l'élastomère de silicone qui constitue la bande transfert 1. L'opérateur peut alors déposer sur cette face extérieure 7 de la portion de travail 3, le premier pli 9 correspondant au contour projeté, débarrassé de toute couche de séparateur, et le positionner par juxtaposition sur ce contour projeté.

Puis le film transparent 12 et la bande transfert 1 sont entraînés dans le sens de la flèche F, en entraînant le premier pli 9, retenu en position convenable sur la face extérieure 7 de la portion de travail 3 par le dispositif de dépression qui équipe cette dernière, en direction des rouleaux de contrôle 19.

Si l'orientation des fibres du pli 9 n'est pas correcte, la première portion de travail 3 et le film 12 sont déplacés en sens inverse et ramenés dans leur position de départ, pour que l'opérateur corrige la position du pli 9.

Par contre, en cas d'accord des informations données par les capteurs de contrôle équipant les rouleaux 19 avec les premières informations codées, donnant l'orientation exigée pour le pli 9, et lues sur le bord codé du film 12, la bande transfert 1 poursuit son déplacement jusqu'à amener la première portion de travail 3 en position dans la seconde zone de travail BB.

Pendant ce temps, la lecture des secondes informations codées sur le film 12 commande l'arrêt de ce dernier à la position suivante, dans laquelle le contour du second pli 9 est disposé dans la première zone de travail AA indépendamment du mouvement de la bande transfert 1.

Le contact déterminant l'arrêt de la première portion de travail 3 dans la seconde zone de travail BB, en vue de la mise en place du premier pli 9, transporté sur cette portion 3, sur l'outillage de drapage 21, et de son compactage, déclenche en même temps des relais temporisés actionnant des électrovannes (non représentés) assurant simultanément la mise à l'air libre des tubes 8 du dispositif de dépression de cette portion de travail 3, et la mise en pression du joint ou boudin 26, qui vient comprimer la bande transfert 1 contre le bossage périphérique 24 de la table-support 22.

La chambre définie entre la face extérieure 7 de la première portion de travail 3 et la table-support 22 est ainsi isolée de façon étanche, puis mise sous vide par la mise en communication de la prise de dépression 23 avec une source de dépression, ce qui oblige la bande transfert 1, souple et déformable, à venir draper le premier pli 9, libéré par le dispositif de dépression de la première portion de travail 3, et à le plaquer sur l'outillage 21, avec une pression suffisante pour assurer son compactage et éviter toute inclusion d'air entre le pli 9 et l'outillage 21.

A compter de l'arrêt de la bande transfert 1, avec la première portion de travail 3 dans la seconde zone de travail BB, et donc avec la seconde portion de travail 4 dans la première zone de travail AA, et durant la temporisation déterminant la durée du compactage du premier pli 9 sur l'outillage 21, l'opérateur peut positionner le second pli 9 sur le contour projeté correspondant sur la face extérieure 7 de la seconde portion de travail 4, et commander une nouvelle séquence de drapage, qui se déclenchera en fin de temporisation, coïncidant avec le dégonflage du joint ou boudin 26, et la mise à l'atmosphère de la chambre définie entre la table-support 22 et la portion de travail en regard de la bande transfert 1.

Le procédé et l'installation selon l'invention seront avantageusement utilisés pour la fabrication en séries limitées de pièces stratifiées en matériaux composites de dimensions relativement modestes, par empilage, compactage et solidarisation d'un nombre donné de plis découpés dans des nappes en matériaux composites.

**Revendications**

1. Procédé de drapage de plis 9 en matériau composite en tissu ou en nappe unidirectionnelle, comprenant des fibres sur un outillage de moulage 21, consistant à disposer une portion 3 d'un matériau porteur 1 dans une première zone de travail AA, à disposer sur cette portion 3 un pli 9 en matériau composite, et à transférer cette portion 3 et le pli 9 dans une seconde zone de travail BB, caractérisé en ce qu'il consiste de plus, après la disposition de la portion 3 dans la première zone de travail AA, à faire apparaître sur cette portion 3 l'image du contour, préalablement tracé sur un patron 12, du pli 9 correspondant, puis à déposer manuellement sur cette portion 3 le pli 9 correspondant, préalablement découpé, à la forme voulue, selon un contour fermé aux dimensions voulues, et avec l'orientation voulue des fibres du matériau composite par rapport au contour, en juxtaposition sur l'image de son contour, et à contrôler ensuite l'orientation du pli 9, et en ce qu'il consiste en outre à positionner le pli 9 disposé sur la portion 3 en regard de l'outillage de moulage 21 à la fin de leur transfert dans la seconde zone de travail BB, puis à isoler la portion 3 recevant le pli 9 dans une enceinte étanche contenant l'outillage de moulage 21, et enfin à mettre l'enceinte étanche en dépression de façon à provoquer la mise en place et le compactage du pli 9 sur l'outillage de moulage 21, ou sur au moins un autre pli 9 préalablement drapé sur ce dernier.

2. Procédé selon la revendication 1, caractérisé en ce qu'il consiste, en même temps que s'effectuent respectivement le transfert de la portion 3 du matériau porteur 1 et du pli 9 dans la seconde zone de travail BB et la mise en dépression de l'enceinte étanche, à faire apparaître l'image du contour d'un autre pli 9 sur une autre portion 4 d'un matériau porteur, disposée dans la première zone de travail AA et à déposer manuellement sur cette autre portion 4, cet autre pli 9 correspondant, en juxtaposition avec l'image de son contour.

3. Procédé selon la revendication 2, caractérisé en ce qu'il consiste à transférer la portion 3 de matériau porteur 1 de la première AA à la seconde zone de travail BB, tandis que l'autre portion 4 de matériau porteur est transférée de la seconde BB à la première zone de travail AA.

4. Procédé selon l'une des revendications 1 à 3, caractérisé en ce qu'il consiste à contrôler l'orientation de chaque pli 9 sur sa trajectoire, lors de son transfert avec la portion 3 ou 4 correspondante du matériau porteur 1 de la première AA à la seconde zone de travail BB, et à commander le retour du pli 9 dans la première zone de travail AA en cas de mauvaise orientation.

5. Procédé selon l'une des revendications 1 à 4, caractérisé en ce qu'il consiste à faire apparaître par transparence, sur des portions 3 ou 4 successives de matériau porteur 1 disposées dans la première zone de travail AA, les images des contours des plis 9 successifs, préalablement tracés sur un patron transparent 12.

6. Procédé selon la revendication 5, caractérisé en ce qu'il consiste à faire apparaître l'image de chaque contour sur la face de la portion 3 ou 4 du matériau porteur 1 opposée à celle 7 sur laquelle est déposé le pli 9 correspondant, et en ce que la disposition en juxtaposition du pli 9 avec l'image de son contour est autorisée par transparence de la portion 3 ou 4 du matériau porteur 1.

7. Installation de drapage de plis 9 en matériau composite sur un outillage de moulage 21, pour la mise en œuvre du procédé selon l'une des revendications 1 à 6 précédentes, caractérisée en ce qu'elle comprend une bande transfert 1, souple et déformable, d'un matériau porteur, entraînée par au moins deux tambours 2, dont l'un au moins est actionné par des moyens d'entraînement, et entre lesquels l'installation présente deux zones de travail AA et BB, dans chacune desquelles peut être amenée au moins une portion de travail 3 ou 4 de la bande transfert 1, en ce que des moyens de projection 10, 11 font apparaître sur chaque portion de travail 3 ou 4 de la bande transfert 1 reçue dans la première zone de travail AA, l'image du contour d'un pli 9 en matériau composite en tissu ou en nappe unidirectionnelle comprenant des fibres, tracé sur un patron 12, de sorte que le pli 9 correspondant puisse être disposé sur toute portion de travail 3 ou 4 en position dans la première zone de travail AA, en ce que chaque pli 9 disposé sur une portion de travail 3 ou 4 de la bande transfert 1, elle-même reçue dans la seconde zone de travail BB, soit en regard d'un outillage de moulage 21, porté par une table-support 22 munie d'une prise de dépression 23 reliée à une source de dépression, et autour duquel la portion de travail 3 ou 4 peut être comprimée de façon étanche contre un appui par des moyens d'application escamotables, définissant entre la portion de travail 3 ou 4, l'outillage de moulage 21 et la table-support 22, une chambre étanche, susceptible d'être mise en dépression et assurer, par déformation de la portion de travail 3 ou 4 de la bande transfert 1, la mise en place du pli 9 et son compactage sur l'outillage de moulage 21 ou sur au moins un pli 9 préalablement plaqué sur ce dernier.

8. Installation selon la revendication 7, caractérisée en ce que l'appui comprend un bossage périphérique 24 porté par la table-support 22 autour de l'outillage de moulage 21 et de la prise de dépression 23, et en regard duquel l'installation présente les moyens d'application escamotables comprenant un corps expansible porté par un cadre 20, de sorte que la portion de travail 3 ou 4 de la bande transfert 1, reçue dans la seconde portion de travail BB, entre le cadre 20 et le bossage périphérique 24 de la table-support 22, soit comprimée de façon étanche sur le bossage périphérique 24 par l'expansion du corps expansible.

9. Installation selon la revendication 8, caractérisée en ce que le corps expansible est constitué par un joint gonflable 26 retenu dans une rainure 25 ménagée dans le cadre 20 en regard du bossage périphérique 24.

10. Installation selon l'une des revendications 7 à 9, caractérisée en ce que la patron 12 sur lequel sont tracés les contours des plis 9 successifs est constitué par un film transparent interposé entre une source lumineuse 10-11 et la bande transfert 1 dans la première zone de travail AA.

11. Installation selon la revendication 10, caractérisée en ce que la source lumineuse est constituée d'une pluralité de tubes luminescents 11 avec interposition d'une plaque de verre dépoli 10 entre ces derniers et le film transparent 12.

12. Installation selon l'une des revendications 10 et 11, caractérisée en ce que le film transparent 12 est déroulé pas à pas, à partir d'un rouleau de chargement 17 et en passant par l'intermédiaire d'un dispositif de tension à au moins un rouleau 16, au moyen d'un rouleau de renvoi 14, entraîné par l'intermédiaire d'un dispositif d'embrayage 13 à partir du dispositif d'entraînement de la bande transfert 1, de sorte que les contours des différents plis 9 soient présentés et arrêtés successivement dans la première zone de travail AA en regard d'une portion de travail 3 ou 4 de la bande transfert 1, puis enroulés sur un rouleau de déchargement 18.

13. Installation selon l'une des revendications 7 à 12, caractérisée en ce que les portions de travail 3 et 4 au moins de la bande transfert 1 sont réalisées en une matière transparente, en ce que l'image des contours des plis 9 est projetée sur la face des portions de travail 3 et 4 qui n'est pas destinée à recevoir les plis 9, la justaposition de ces derniers sur l'image de leur contour correspondant étant autorisée par la transparence des portions de travail 3 et 4.

14. Installation selon l'une des revendications 7 à 13, caractérisée en ce que chaque portion de travail 3 ou 4 de la bande transfert 1 est munie d'un dispositif d'aspiration assurant une dépression au niveau de sa face 7 destinée à recevoir les plis 9.

15. Installation selon la revendication 14, caractérisée en ce que le dispositif d'aspiration comprend une pluralité d'orifices 6 régulièrement pratiqués dans la face 7 de la portion de travail 3 ou 4 de la bande transfert 1 destinée à recevoir les plis 9, les orifices 6 débouchant dans des canaux 5 percés dans l'épaisseur de la portion de travail 3 ou 4 correspondante et débouchant eux-mêmes dans des tubes 8 bordant latéralement la bande transfert 1 et reliés à une source de dépression.

16. Installation selon l'une des revendications 7 à 15, caractérisée en ce que le contrôle de l'orientation des plis 9 est assuré sur toute la largeur de la bande transfert 1, au moyen de capteurs de résistivité montés sur au moins deux rouleaux 19 venant en contact avec les plis 9 sur leur trajectoire entre la première AA et la seconde zone de travail BB, les capteurs étant sensibles aux variations de résistivité du matériau composite entre deux contacts d'écartement constant définis par les rouleaux de capteurs 19, pour commander le retour d'un pli 9 mal orienté dans la première zone de travail AA.

17. Installation selon l'une des revendications 7 à 16, caractérisée en ce que la bande transfert 1 est une bande sans fin montée autour de deux tambours rotatifs 2 d'axes horizontaux et parallèles, les première et seconde zones de travail AA et BB de l'installation étant définies respectivement à la partie supérieure et à la partie inférieure entre les deux tambours 2 et la bande transfert 1 présentant deux portions de travail 3 et 4 espacées l'une de l'autre de telle sorte que lorsque des contacts portés par la bande transfert 1 commandent l'arrêt du déplacement de cette dernière dans une position dans laquelle l'une des portions de travail 3 ou 4 est reçue dans l'une des zones de travail AA ou BB, l'autre portion de travail 4 ou 3 est simultanément reçue dans l'autre zone de travail BB ou AA.

## Claims

1. Method of laying plies 9 of composite material, in fabric, or unidirectional web containing fibers, on a moulding apparatus 21, consisting in placing a portion 3 of a carrier material 1 in a first working area AA, in laying on said portion 3 a ply 9 in composite material, and in transferring said portion 3 and the ply 9 to a second working area BB, characterised in that it further consists, after placing portion 3 in the first working area AA, in causing the image already outlined on a pattern 12 of the corresponding ply 9, to appear on said portion 3, and in laying manually on said portion 3, the corresponding ply 9, cut previously to the required shape, and defining a surface to the required dimensions, the fibers being of the composite material being given the required orientation with respect to the outline, and said ply 9 being laid in juxtaposition on the image of its outline, then in checking the orientation of the ply 9, said method further consisting is positioning the ply 9 laid on the portion 3 in facing relation to the moulding apparatus 21 at the end of their transfer into the second working area BB, and in isolating said portion 3 which receives said ply 9 inside a tight enclosure containing the moulding apparatus 21, and finally depressurizing the inside of said tight enclosure in order to cause the positioning and compacting of ply 9 on the moulding apparatus, or on at least another ply 9 already laid thereon.

2. Method according to claim 1, characterised in that it consists, simultaneously to the transfer of the portion 3 of carrier material 1 and of the ply 9 into the second working area BB, and to depressurizing of the tight enclosure, in causing the image of the outline of another ply 9 to appear on another portion 4 of carrier material, situated in the first working area AA, and in manually laying on said other portion 4, said other corresponding ply 9, in juxtaposition with the image of its outline.

3. Method according to claim 2, characterised in that it consists in transferring said portion 3 of carrier material 1 from the first working area AA to the second BB, whereas the other portion 4 of carrier material in transferred from said second working area BB to said first AA.

4. Method according to one of claims 1 to 3, characterised in that it consists in checking the orientation of every ply 9 on its transfer course, during its transfer with corresponding portion 3 or 4 of carrier material 1 from the first working area AA to the second BB, and in controlling the return of ply 9 to the first working area AA in case of wrong orientation.

5. Method according to one of claims 1 to 4, characterised in that it consists in causing the images of successive plies 9 already outlined on a transparent pattern 12, to appear by transparency, on successive portions 3 or 4 of carrier material 1 placed in the first working area AA.

6. Method according to claim 5, characterised in that it consists in causing the image of every outline to appear on the face or portion 3 or 4 of carrier material 1 which is opposite the face 7 on which is laid the corresponding ply 9, and in that the juxtaposed disposition of said ply 9 with respect to its outline is authorized in transparency of portion 3 or 4 of carrier material 1.

7. Installation for laying composite material plies 9 on a moulding apparatus 21, designed for carrying out the method according to one of preceding claims 1 to 6, characterised in that said installation comprises a supple and deformable conveyor belt 1, of a carrier material, driven by at least two drums 2, one at least of which is actuated by driving means, and between which drums the installation presents two working areas AA and BB, in each one of which can be brought at least a work portion 3 or 4 of the conveyor belt 1, in that projecting means 10, 11 causes the appearance on every work portion 3 or 4 of the conveyor belt 1 received in the first work area AA, of the image of the outline of a ply in composite material, or in a fabric containing fibers, which is traced on a pattern 12, so that the corresponding ply 9 can be placed over any work portion 3 or 4 in position in the first work area AA, in that every ply 9 thus placed on a work portion 3 or 4 of the conveyor belt 1, which is in turn received in the second work area BB, is facing a moulding apparatus 21, carried by a support-table 22 equiped with a depressurizing point 23 connected with a depressurizing source, and about which apparatus the work portion 3 or 4 can be compressed in tight manner against a support by way or retractable applying means, defining between said work portion 3 or 4, said moulding apparatus 21 and said support-table 22, a tight chamber adapted to be depressurized and to cause, by deformation of work portion 3 or 4 of conveyor belt 1, the positioning of the ply 9 and its compacting over the moulding tool 21 or over at least a ply 9 already laid beforehand on the latter.

8. Installation according to claim 7, characterised in that said support comprises a peripheral boss 24 carried by the support-table 22 around the moulding apparatus 21 and the depressurizing point 23, and opposite which the installation presents retractable application means consisting of an expandible body carried by a frame 20, in such a way that the work portion 3 or 4 of the conveyor belt 1, received in the second work area BB, between the frame 20 and the peripheral boss 24 of the support-table 22, is compressed in tight manner on said peripheral boss 24 through expansion of said expandible body.

9. Installation according to claim 8, characterised in that said expandible body in constituted by an inflatable joint 26 held in position in a groove 25 provided in the frame 20 opposite the peripheral boss 24.

10. Installation according to one of claims 7 to 9, characterised in that the pattern 12 on which are traced the outlines of the successive plies 9 is constituted by a transparent film interposed between a light source 10-11 and the conveyor belt 1 in the first work area AA.

11. Installation according to claim 10, characterised in that the light source is constituted by a plurality of glowing tubes 11 with interposition of a plate of frosted glass 10 between said tubes and the transparent film 12.

12. Installation according to one of claims 10 and 11, characterised in that the transparent film 12 is unwound in stepwise manner from a loading reel 17 and goes through tensioning means with at least one roll 16, and via a return roller 14, driven by means of a clutch device 13 from the device driving the conveyor belt 1, so that the outlines of the different plies 9 are successively presented and stopped in the first work area AA opposite a work portion 3 or 4 of the conveyor belt 1, after what they are wound over an unloading roller 18.

13. Installation according to one of claims 7 to 12, characterised in that the work portions 3 and 4 at least of the conveyor belt 1 are made from a transparent material, in that the image of the outlines of plies 9 is projected on the face of the work portions 3 and 4 which is not designed to receive the plies 9, the juxtaposition of these latters on the image of their corresponding outline being permitted by the transparency of work portions 3 and 4.

14. Installation according to one of claims 7 to 13, characterised in that every work portion 3 or 4 of the conveyor belt 1 is provided with suction means to create a depression on the level of its face 7 designed to receive the plies 9.

15. Installation according to claim 14, characterised in that said suction means comprise a plurality of orifices 6 regularly distributed in the face 7 of work portion 3 or 4 of the conveyor belt 1 designed to receive the plies 9, said orifices 6 issuing into channels 5 cut through the thickness of the corresponding work portion 3 or 4, said channels issuing into tubes 8 bordering laterally the conveyor belt 1 and connected with a depressurizing source.

16. Installation according to one of claims 7 to 15, characterised in that the orientation of the plies 9 is controlled throughout the width of the conveyor belt 1, by means of resistivity sensors mounted on at least two rollers 19 which come into contact with the plies 9 when these are on their way from the first work area AA to the second work area BB, said sensors being responsive to variations in the resistivity of the composite material between two points at a constant distance one from the other and defined by sensor rollers 19, to control the return of an incorrectly oriented ply 9 to the first work area AA.

17. Installation according to one of claims 7 to 16, characterised in that the conveyor belt 1 is an endless belt mounted around two rotary drums 2 of horizontal and parallel axes, the first and second work areas AA and BB of the installation being respectively defined at the upper part and at the lower part between two drums 2 and the conveyor belt 1 having two work portions 3 and 4 spaced apart from one another so that when contacts carried by the conveyor belt 1 control the stoppage of the movement of the latter in a position in which one of the work portions 3 or 4 is received in one of the work areas AA or BB, the other work portion 4 or 3 is simultaneously received in the other work area BB or AA.

**Ansprüche**

1. Verfahren zum Legen von Bahnen (9), die aus zusammengesetztem Material aus Gewebe oder aus einseitig gerichtetem, Fasern enthaltendem Vlies bestehen, auf einer Formvorrichtung (21), wobei man einen Arbeitsabschnitt (3) eines Überführungsbandes (1) in einer ersten Arbeitszone AA anordnet, auf diesem Arbeitsabschnitt (3) eine Bahn (9) aus zusammengesetztem Material anordnet und diesen Arbeitsabschnitt (3) und diese Bahn (9) in eine zweite Arbeitszone BB überführt, dadurch gekennzeichnet, daß man, nachdem der Arbeitsabschnitt (3) in der ersten Arbeitszone AA angeordnet worden ist, auf diesem Arbeitsabschnitt (3) das zuvor auf eine Schablone (12) gezeichnete Umrißbild der entsprechenden Bahn (9) abbildet, die entsprechende Bahn (9), die zuvor gemäß einer geschlossenen Kontour in den gewünschten Dimensionen und bei gewünschter Ausrichtung der Fasern des zusammengesetzten Materials in Bezug auf diese Kontour auf die gewünschte Gestalt zurechtgeschnitten worden ist, in Übereinstimmung mit dem Bilde ihres Umrisses auf diesen Arbeitsabschnitt (3) von Hand auflegt, und danach die Ausrichtung der Bahn (9) kontrolliert, und daß man die auf dem Arbeitsabschnitt (3) angeordnete Bahn (9) am Ende ihrer Überführung in die zweite Arbeitszone BB gegenüber der Formvorrichtung (21) in Position bringt, danach den die Bahn (9) tragenden Arbeitsabschnitt (3) in einen die Formvorrichtung (21) enthaltenden, abgeschlossenen Raum sperrt und schließlich den abgeschlossenen Raum evakuiert, so daß die Bahn (9) auf der Formvorrichtung (21) oder auf mindestens einer weiteren, auf dieser Formvorrichtung zuvor abgelegten Bahn (9) plaziert und dort verdichtet wird.

2. Verfahren nach Anspruch 1, dadurch gekennzeichnet, daß man zum gleichen Zeitpunkt, zu dem man die Überführung des Arbeitsabschnitts 3 des Überführungsbandes (1) und der Bahn (9) in die zweite Arbeitszone BB, beziehungsweise das Evakuieren des abgeschlossenen Raumes bewerkstelligt, das Umrißbild einer weiteren Bahn (9) auf einem weiteren Arbeitsabschnitt (4) eines Überführungsbandes abbildet, der in der ersten Arbeitszone AA angeordnet ist, und daß man auf diesem weiteren Arbeitsabschnitt (4) diese weitere Bahn (9) in Übereinstimmung mit ihrem Umrißbild ablegt.

3. Verfahren nach Anspruch 2, dadurch gekennzeichnet, daß man den Arbeitsabschnitt (3) des Überführungsbandes (1) aus der ersten Arbeitszone AA in die zweite Arbeitszone BB überführt, während man den weiteren Arbeitsabschnitt (4) des Überführungsbandes von der zweiten Arbeitszone BB in die erste Arbeitszone AA überführt.

4. Verfahren nach einem der Ansprüche 1 bis 3, dadurch gekennzeichnet, daß man die Ausrichtung jeder Bahn (9) auf ihrem Wege während ihrer Überführung mit dem entsprechenden Arbeitsabschnitt (3) oder (4) des Überführungsbandes (1) aus der ersten Arbeitszone AA in die zweite Arbeitszone BB kontrolliert, und daß man im Falle einer falschen Ausrichtung die Rückkehr der Bahn (9) in die erste Arbeitszone AA bewerkstelligt.

5. Verfahren nach einem der Ansprüche 1 bis 4, dadurch gekennzeichnet, daß man durch Transparenz auf den aufeinanderfolgenden Arbeitsabschnitten 3 oder 4 des in der ersten Arbeitszone AA angeordneten Überführungsbandes (1) die Umrißbilder der aufeinander folgenden Bahnen (9) abbildet, die zuvor auf eine transparente Schablone (12) gezeichnet worden sind.

6. Verfahren nach Anspruch 5, dadurch gekennzeichnet, daß man das Bild jedes Umrisses auf der Oberfläche des Arbeitsabschnitts (3) oder (4) des Überführungsbandes (1) abbildet, die der Oberfläche (7) gegenüber liegt, auf welcher die entsprechende Bahn (9) angeordnet ist, und daß man die Positionierung der Bahn (9) in Übereinstimmung mit ihrem Umrißbild durch Transparenz des Arbeitsabschnitts (3) oder (4) des Überführungsbandes (1) ermöglicht.

7. Vorrichtung zum Legen von Bahnen (9) aus zusammengesetztem Material auf einer Formvorrichtung (21), zur Durchführung des Verfahrens gemäß einem der Ansprüche 1 bis 6, gekennzeichnet durch ein geschmeidiges und deformierbares Überführungsband (1) aus einem Trägermaterial, das durch mindestens zwei Trommeln (2) angetrieben wird, von denen mindestens eine durch Antriebsmittel betätigt wird und zwischen denen die Vorrichtung zwei Arbeitszonen AA und BB aufweist, in welchen jeweils mindestens ein Arbeitsabschnitt (3) oder (4) des Überführungsbandes (1) geführt werden kann, weiterhin gekennzeichnet durch Projektionsmittel (10, 11), welche auf jedem in der ersten Arbeitszone AA geführten Arbeitsabschnitt (3) oder (4) des Überführungsbandes (1) das zuvor auf eine Schablone (12) gezeichnete Umrißbild einer Bahn (9) aus zusammengesetztem Material aus Fasern enthaltendem Gewebe abbilden, so daß die entsprechende Bahn (9) auf jedem Arbeitsabschnitt (3) oder (4) in der ersten Arbeitszone AA in Position gebracht werden kann, weiterhin dadurch gekennzeichnet, daß jede Bahn (9), die auf einem Arbeitsabschnitt (3) oder (4) des Überführungsbandes (1) angeordnet ist, wenn dieser in der zweiten Arbeitszone BB geführt wird, sich gegenüber einer Formvorrichtung (21) befindet, die von einem Auflagetisch (22) getragen wird, der mit einem mit einer Unterdruckquelle verbundenen Vakuumanschluß (23) ausgerüstet ist, und um welche herum der Arbeitsabschnitt (3) oder (4) in dichtender Weise mittels versenkbarer Einrichtungen gegen eine Abstützung gepreßt werden kann, die zwischen dem Arbeitsabschnitt (3) oder (4), der Formvorrichtung (21) und dem Auflagetisch (22) einen abgeschlossenen Raum umschließen, der unter Vakuum gesetzt werden kann, und die durch Deformation des Arbeitsabschnittes (3) oder (4) des Überführungsbandes (1) die Positionierung der Bahn (9) und deren Verdichtung auf der Formvorrichtung (21) oder auf mindestens einer, zuvor auf der letzteren abgelegten Bahn (9) gewährleisten.

8. Vorrichtung nach Anspruch 7, dadurch gekennzeichnet, daß diese Abstützung einen längsumlaufenden Höcker (24) aufweist, der von dem Auflagetisch (22) um die Formvorrichtung (21) und den Vakuumanschluß (23) herum gehalten wird, und dem gegenüber die Vorrichtung diese versenkbaren Einrichtungen aufweist, die einen von einem Rahmen (20) getragenen ausdehnbaren Körper einschließen, so daß der in der zweiten Arbeitszone BB geführte Arbeitsabschnitt (3) oder (4) des Überführungsbandes (1) zwischen dem Rahmen (20) und dem längs umlaufenden Höcker (24) des Auflagetisches (22) in dichtender Weise infolge der Ausdehnung des ausdehnbaren Körpers auf dem längsumlaufenden Höcker (24) komprimiert werden kann.

9. Vorrichtung nach Anspruch 8, dadurch gekennzeichnet, daß dieser ausdehnbare Körper aus einem aufblasbaren Wulst (26) besteht, der in einer in den Rahmen (20) gegenüber dem längs umlaufenden Höcker (24) eingeschnittenen Fuge (25) angeordnet ist.

10. Vorrichtung nach einem der Ansprüche 7 bis 9, dadurch gekennzeichnet, daß die Schablone (12), auf welche Konturen der aufeinanderfolgenden Bahnen (9) gezeichnet sind, aus einem transparenten Film besteht, der zwischen einer Lichtquelle (10, 11) und dem Überführungsband (1) in der ersten Arbeitszone AA angeordnet ist.

11. Vorrichtung nach Anspruch 10, dadurch gekennzeichnet, daß diese Lichtquelle aus einer Mehrzahl von Leuchtröhren (11) und einer zwischen diese Röhren und den transparenten Film (12) angeordneten Mattglasscheibe (10) besteht.

12. Vorrichtung nach einem der Ansprüche 10 oder 11, dadurch gekennzeichnet, daß der transparente Film (12), wobei er von einer Abwickelrolle (17) ausgeht und mindestens eine mit einer Spannvorrichtung (16) ausgerüstete Rolle passiert, mittels einer Antriebsrolle, die über eine Magnetkupplung (13) von der Antriebsvorrichtung des Überführungsbandes (1) angetrieben wird, Schritt für Schritt derart abgewickelt wird, daß die Umrisse der verschiedenen Bahnen (9) nacheinander in der ersten Arbeitszone erscheinen und gegenüber einem Arbeitsabschnitt (3) oder (4) der Überführungsbahn (1) angehalten werden, und daß der Film (12) dann auf einer Aufwickeltrommel (18) aufgewickelt wird.

13. Vorrichtung nach einem der Ansprüche 7 bis 12, dadurch gekennzeichnet, daß die Arbeitsabschnitte (3) und (4) mindestens des Überführungsbandes (1) in einem transparenten Material ausgeführt sind und daß das Umrißbild der Bahnen (9) auf diejenige Oberfläche der Arbeitsabschnitte (3) und (4) projiziert wird, die nicht dazu bestimmt ist, die Bahnen (9) aufzunehmen, wobei das Übereinstimmen der letzteren mit ihrem Umrißbild durch die Transparenz der Arbeitsabschnitte (3) und (4) ermöglicht wird.

14. Vorrichtung nach einem der Ansprüche 7 bis 13, dadurch gekennzeichnet, daß jeder Arbeitsabschnitt 3 oder 4 des Überführungsbandes (1) mit einer Ansaugvorrichtung ausgerüstet ist, die einen Unterdruck in Höhe seiner Oberfläche (7) ermöglicht, welche dazu bestimmt ist, die Bahnen (9) aufzunehmen.

15. Vorrichtung nach Anspruch 14, dadurch gekennzeichnet, daß diese Ansaugvorrichtung eine Vielzahl von Durchbrüchen (6) aufweist, die regelmäßig in die zur Aufnahme der Bahnen (9) bestimmte Oberfläche (7) des Arbeitsabschnitts (3) oder (4) des Überführungsbandes (1) eingeschnitten sind, und die in Kanäle (5) münden, welche in die Dicke des entsprechenden Arbeitsabschnittes (3) oder (4) eingearbeitet sind und die wiederum in Rohre (8) münden, welche das Überführungsband (1) seitlich einfassen und mit einer Unterdruckquelle verbunden sind.

16. Vorrichtung nach einem der Ansprüche 7 bis 15, dadurch gekennzeichnet, daß die Überwachung der Ausrichtung der Bahnen (9) über die gesamte Breite des Überführungsbandes (1) und mittels elektrischer Widerstandsmeßfühler durchgeführt wird, welche auf mindestens zwei Rollen (19) montiert sind, die mit den Bahnen (9) auf derem Wege von der ersten Arbeitszone AA zur zweiten Arbeitszone BB in Berührung kommen, wobei diese Fühler empfindlich sind gegenüber Änderungen des spezifischen Widerstandes des zusammengesetzten Materials zwischen zwei spezifisch beabstandeten Kontakten auf den Fühlerrollen (19) und die Rückkehr einer falsch ausgerichteten Bahn (9) in die erste Arbeitszone AA regeln.

17. Vorrichtung nach einem der Ansprüche 7 bis 16, dadurch gekennzeichnet, daß das Überführungsband (1) ein Endlosband ist, welches um zwei Drehtrommeln mit horizontalen und zueinander parallelen Achsen gelegt ist, wobei die erste AA und die zweite Arbeitszone BB der Vorrichtung im oberen Teil beziehungsweise im unteren Teil zwischen den beiden Trommeln (2) definiert sind und das Überführungsband (1) zwei Arbeitsabschnitte (3) und (4) bildet, die voneinander derart beabstandet sind, daß dann, wenn die vom Überführungsband (1) getragenen Kontakte dieses Band in einer Position stoppen, in der der eine Arbeitsabschnitt (3) oder (4) in einer der Arbeitszonen AA oder BB sich befindet, der andere Arbeitsabschnitt (3) oder (4) gleichzeitig in der anderen Arbeitszone BB oder AA sich befindet.

Fig.1

Fig.2

_Fig.3_

_Fig.4_